# FASCICULE DE BREVET EUROPEEN

(11) **EP 1 411 318 B1**
(45) Date de publication et mention de la délivrance du brevet: **15.07.2009**
(21) Numéro de dépôt: 03292566.1
(22) Date de dépôt: 15.10.2003
(51) Int. Cl.: F42C 15/34, F02K 9/38

(54) **Dispositif pneumatique pour augmenter la sécurité et pour diminuer la vulnérabilité des munitions**
Pneumatische Vorrichtung zum Erhöhen der Sicherheit und zur Minderung der Empfindlichkeit von Munition
Pneumatic apparatus for increasing the safety and for reducing the vulnerability of munitions

(30) Priorité: 18.10.2002 FR 0212989
(43) Date de publication de la demande: 21.04.2004
(73) Titulaire: SNPE Matériaux Energétiques, 75004 Paris (FR)
(72) Inventeur: Guengant, Yves, 91610 Ballancourt (FR)
(74) Mandataire: Le Roux, Martine

(56) Documents cités:
- GB-A- 2 186 905
- US-A- 5 044 154
- US-A- 5 153 369
- US-A- 5 708 229

## Description

La présente invention concerne une munition explosible associée à un dispositif pour augmenter la sécurité et pour diminuer la vulnérabilité de ladite munition explosible.

Dans la suite de la description, le mot « munition » devra être pris dans un sens général, c'est-à-dire comme tout objet destiné à alimenter un système d'armes et contenant un matériau explosible. Les explosifs composites et les propergols solides sont tous deux des matériaux énergétiques explosibles. Dans la suite de la description, une munition pourra donc représenter à la fois un moteur à propergol solide, celui-ci comprenant un bloc de propergol solide, ou une tête militaire, celle-ci contenant un explosif.

Il est connu par la demande de brevet WO 94/19298 d'injecter un matériau atténuateur dans le canal d'un propergol solide d'un moteur de roquette. Lorsqu'un moteur de roquette reçoit un projectile, le matériau injecté dans le canal du propergol est chargé d'atténuer les effets de l'impact causé par le projectile sur le propergol solide. La présence du matériau atténuateur permet ainsi de modérer les réactions et d'éviter une initiation ou une explosion intempestive du bloc de propergol. Ce matériau atténuateur aura préférentiellement une consistance friable et sera par exemple sous la forme de mousse de polymère, tel que du polystyrène ou du polyuréthane, ou de fibres par exemple de Kevlar (marque déposée).

Il existe un certain nombre d'autres situations pouvant amener à la dégradation d'un matériau énergétique explosible et pouvant provoquer son initiation ou son explosion intempestive. Ces différentes situations sont les suivantes :
- un chargement de matériau énergétique peut être soumis à des frottements intempestifs et ainsi s'initier en combustion ;
- un chargement de matériau énergétique peut être soumis à des accélérations ou décélérations ainsi qu'à des gradients de température pouvant l'amener à bouger dans la munition, à se décoller ou à se fissurer. Une fissuration d'un bloc de propergol solide peut par exemple entraîner un éclatement du moteur lors de l'allumage ;
- un chargement de matériau énergétique peut être soumis à un échauffement plus ou moins rapide pouvant aller de quelques degrés par heure à quelques dizaines de degrés par minutes. Un échauffement lent du matériau énergétique peut entraîner sa transformation en mousse, sa liquéfaction ou sa décomposition et ainsi, provoquer des réactions pyrotechniques violentes ;
- un chargement de matériau énergétique peut être soumis à de multiples agressions sur sa surface ou à proximité de sa surface, comme un impact d'une balle ou d'un fragment, un incendie, pouvant l'amener à se fragmenter ou à s'effondrer sur lui-même. Les agressions peuvent également provoquer des réactions violentes.

L'insertion de mousse dans le canal du bloc de propergol solide comme proposé dans l'art antérieur est une solution efficace pour atténuer l'effet d'un impact d'une balle ou d'un fragment mais ne constitue pas une solution dans toutes les situations présentées ci-dessus.

Le brevet US 5 153 369 décrit une munition comprenant à l'arrière un moteur à propergol solide et à l'avant une tête miliaire dans laquelle est placée une charge explosive. Entre ces deux entités, la munition comporte une partie intermédiaire comprenant un dispositif permettant de faire passer une telle munition d'un état désarmé à un état armé. Ledit dispositif, complexe, comprend un sac gonflable. Le gonflement du sac rend la munition opérationnelle, prête à exploser. Un tel sac intervient dans le déclenchement de l'explosion et non pas dans un dispositif pour augmenter la sécurité et diminuer la vulnérabilité d'une munition (voir la description de l'invention ci-après).

Le but de l'invention est donc de proposer une munition explosible associée à un dispositif permettant de répondre à tous les problèmes survenant dans les situations présentées ci-dessus, munition telle que caractérisée dans les revendications annexées.

Ce but est atteint par un dispositif pour augmenter la sécurité et diminuer la vulnérabilité d'une munition, munition comprenant une coque, appelée généralement dans le domaine une virole, dans laquelle est inséré un matériau explosible. Ledit dispositif est **caractérisé en ce qu'**il comprend :
- au moins un sac gonflable étanche, apte à occuper partiellement ou complètement les espaces vides à l'intérieur de ladite munition lorsqu'il est gonflé, pour assurer ainsi sa fonction ; ou
- au moins un sac gonflable étanche gonflé, assurant sa fonction en occupant partiellement ou complètement les espaces vides à l'intérieur de ladite munition.

Le sac gonflable est selon l'invention destiné à remplir partiellement ou complètement les espaces vides à l'intérieur d'une munition et permet ainsi de caler le chargement de matériau énergétique et d'éviter qu'il se décolle ou qu'il se fissure lorsque la munition est soumise à des accélérations ou décélérations ou à des gradients de température.

La présence de ce sac gonflable dans la munition permet également d'éviter au chargement de gonfler ou de couler lorsque la munition est soumise à un échauffement plus ou moins rapide. Le chargement peut donc conserver sa géométrie initiale grâce à la présence du sac gonflable dans la munition.

Selon une particularité de la munition selon l'invention, le matériau explosible est un bloc de propergol solide inséré dans un moteur à propergol solide, ce moteur à propergol solide disposant d'un allumeur destiné à initier en combustion le bloc de propergol solide et d'une tuyère par laquelle se dégage les gaz issus de la combustion du bloc de propergol solide.

Selon une première variante de réalisation, le bloc de propergol solide est à canal central, le sac gonflable étant destiné, une fois gonflé, à occuper tout l'espace formé par le canal central du bloc de propergol solide.

Selon une autre particularité, le sac gonflable s'étend dans tout le canal central du bloc de propergol solide et jusque dans la tuyère de manière à isoler le bloc de propergol solide de l'atmosphère extérieur lorsque le moteur ne fonctionne pas.

Selon une seconde variante de réalisation, le bloc de propergol solide est à combustion frontale et le sac gonflable, une fois gonflé, occupe l'espace vide situé juste en amont de la tuyère, entre l'arrière du moteur et le bloc de propergol solide.

Selon une particularité de ces deux variantes de réalisation, l'allumeur est en contact avec le sac gonflable de manière à pouvoir percer le sac lors de l'allumage et ainsi, le consumer ou l'éjecter à travers la tuyère.

Selon une autre particularité de ces deux variantes de réalisation, le gaz servant au gonflement du sac est réactif de manière à pouvoir participer à l'allumage du bloc de propergol solide et ainsi, compléter l'effet de l'allumeur.

Selon une autre particularité, le matériau explosible est un explosif composite inséré dans une tête militaire, cette tête militaire disposant d'un système d'amorçage de l'explosif composite disposé dans le fond de la coque de la tête militaire.

Selon une autre particularité, le sac gonflable, une fois gonflé, occupe l'espace vide situé entre le fond de la coque et l'explosif composite, et est disposé autour du système d'amorçage. Le sac gonflable comporte donc un orifice central permettant de laisser passer le système d'amorçage vers l'explosif composite.

Selon une autre particularité, la munition selon l'invention comprend des moyens de gonflage du sac actionnables sur commande à l'aide de moyens de commande.

Selon une autre particularité, les moyens de commande des moyens de gonflage sont manuels.

Selon une autre particularité, les moyens de commande des moyens de gonflage sont automatiques et réagissent à un événement.

Selon une autre particularité du dispositif, le sac gonflable est constitué d'un matériau souple ou semi-rigide.

L'invention, avec ses caractéristiques et avantages, ressortira plus clairement à la lecture de la description faite en référence aux dessins annexés dans lesquels :
- la figure 1 représente de manière schématique, en coupe longitudinale, un moteur à propergol solide à canal central,
- La figure 2 représente de manière schématique, en coupe longitudinale, une tête militaire.

L'invention concerne donc une munition explosible équipée d'un dispositif pneumatique ou sac gonflable destiné à remplir partiellement ou complètement les espaces vides à l'intérieur d'une munition.

Comme déjà souligné au début de cette description, le terme « munition » doit être pris dans un sens général, c'est-à-dire comme tout objet contenant un matériau énergétique explosible.

Selon l'invention, le sac gonflable est étanche et constitué d'un matériau souple ou semi-rigide. Il est gonflé à une pression donnée pouvant aller de quelques bars à quelques dizaines de bars. Le gonflage du sac peut être réalisé une fois que le sac est mis en place dans la munition. Dans ce cas, la commande d'actionnement du gonflage sera par exemple manuelle.

Selon l'invention, le déclenchement du gonflage du sac peut être effectué de manière automatique à la suite de la détection d'un événement particulier tel qu'une agression ou une sollicitation particulière. Ce gonflage pourra être opéré par exemple, par un générateur de gaz. Lorsqu'un événement particulier survient, le générateur de gaz est déclenché et permet de gonfler très rapidement le sac en place dans la munition et ainsi, d'éviter la dégradation du matériau énergétique et de permettre son maintien en position dans la munition. Le générateur de gaz pourra être couplé à des capteurs spécifiques et déclenché lorsqu'un ou plusieurs capteurs ont détecté par exemple une agression sur la munition, une sollicitation non souhaitée de la munition ou une variation de température susceptible d'affecter le matériau énergétique.

Selon l'invention, le sac gonflable peut être inséré dans un moteur 1 à propergol solide.

De manière connue, un moteur 1 à propergol solide comprend principalement une coque 10, appelée généralement dans le domaine une virole, dans laquelle est inséré le bloc 11 de propergol solide, un allumeur 12 destiné à initier en combustion le bloc 11 de propergol solide et une tuyère 13 située à l'arrière du moteur. Cette tuyère 13 est destinée à l'échappement des gaz issus de la combustion du bloc 11 de propergol solide, cet échappement permettant la propulsion du système incluant le moteur 1 à propergol solide.

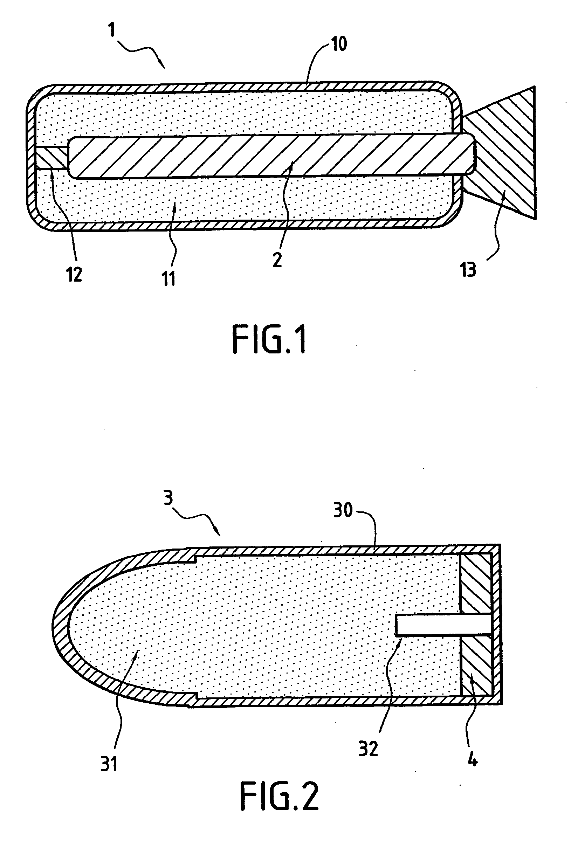

Selon l'invention, en référence à la figure 1, dans le cas d'un moteur 1 à propergol solide dont le bloc 11 de propergol solide est à canal central, le sac 2 gonflable est destiné à venir occuper, une fois gonflé, tout l'espace formé par le canal central du bloc 11 de propergol solide. Ainsi, lorsque le bloc 11 de propergol solide se fissure, se fragmente ou s'écaille au niveau de son canal central après avoir subi un impact de balle ou de fragment, le sac 2 gonflable, inséré dans le canal central du bloc 11 de propergol solide, permettra de maintenir ce bloc 11 de propergol solide en forme et ainsi d'éviter les réactions violentes qui pourraient résulter de ces dégradations du bloc 11.

De même, lorsque le bloc 11 de propergol solide à canal central subit un incendie, ce bloc 11 est susceptible de s'initier en combustion en surface ou à proximité de sa surface. Les gaz de combustion qui résultent de cette initiation sont susceptibles de provoquer l'effondrement du bloc 11 de propergol solide vers son canal. Cet effondrement entraîne une augmentation considérable de la surface de combustion, cette augmentation pouvant provoquer des réactions violentes. Le sac 2 gonflable, placé dans le canal central du bloc 11 de propergol solide, permet ainsi de maintenir le bloc 11 propergol solide dans sa géométrie initiale et ainsi de retarder l'effondrement du bloc 11 de propergol solide. Ainsi les gaz de combustion peuvent provoquer l'ouverture de la coque 10 et ainsi donner lieu à des réactions de combustible simple.

Selon l'invention, il est possible de prévoir que l'allumeur 12 soit en contact avec le sac 2 gonflable, de manière à percer le sac 2 gonflable lors de l'allumage du moteur 1. Le sac 2 gonflable, une fois percé par l'allumeur 12 pourra être consumé ou éjecté par la tuyère 13 du moteur 1 à propergol solide.

Selon l'invention, comme représenté en figure 1, le sac 2 gonflable s'étend dans tout le canal central du bloc 11 de propergol solide et comporte une extrémité saillante à l'intérieur de la tuyère 13. Ainsi, le sac 2 gonflable obture la tuyère 13 et remplace dans ce cas l'opercule de tuyère habituellement utilisé pour éviter au chargement propulsif contenu dans le moteur d'être dégradé au contact de l'atmosphère extérieure.

Sur la figure 1, le sac 2 gonflable a la forme d'un cylindre de révolution allongé occupant le canal central du bloc 11 de propergol solide. Selon l'invention, le sac 2 gonflable pourra avoir une forme différente s'adaptant parfaitement à la géométrie parfois complexe du canal central du bloc 11 de propergol solide.

Selon l'invention, le bloc 11 de propergol solide peut également être à combustion frontale. Les blocs pleins à combustion frontale sont moins sujets à se fragmenter ou à s'effondrer en cas d'agression ou de sollicitations mécaniques ou thermique car ils sont beaucoup plus résistants que les blocs à canal central. Dans un moteur à propergol solide utilisant un chargement à combustion frontale, le sac gonflable sera par exemple situé juste en amont de la tuyère, entre la tuyère et le chargement propulsif. Il permettra donc de caler le chargement propulsif vers l'avant du moteur et jouera également comme décrit ci-dessus le rôle d'opercule de tuyère.

En référence à la figure 2, le sac gonflable peut être inséré dans une tête 3 militaire.

Une tête 3 militaire comprend de manière classique une coque 30 ayant la forme d'une ogive, cette coque 30 renfermant un explosif 31 composite. Cet explosif 31 composite pourra être calé selon l'invention vers l'avant de la tête 3 militaire par un sac 4 gonflable, disposé dans la coque 30 entre l'arrière de la tête 3 et l'explosif 31. Le sac 4 gonflable comportera préférentiellement un orifice central permettant de laisser passer le système d'amorçage 32 situé à l'arrière de la tête 3 et destiné à venir en contact avec l'explosif 31.

Selon l'invention, le sac 4 gonflable dans une tête 3 militaire permettra de caler l'explosif 31 et d'éviter qu'il se fissure, se décolle ou s'effondre suite à différentes sollicitations ou agressions. Ces sollicitations ou agressions que peuvent subir une tête militaire sont similaires à celles décrites ci-dessus pouvant affecter le moteur 1 à propergol solide.

## Revendications

1. Munition explosible, comprenant une coque (10, 30) dans laquelle sont insérés un matériau explosible (11, 31) et un dispositif pour augmenter la sécurité et diminuer la vulnérabilité de ladite munition, **caractérisé en ce que** ledit dispositif comprend au moins un sac (2, 4) gonflable étanche, apte à occuper partiellement ou complètement les espaces vides à l'intérieur de ladite munition lorsqu'il est gonflé, pour assurer ainsi sa fonction ; ou
au moins un sac (2, 4) gonflable étanche gonflé, assurant sa fonction en occupant partiellement ou complètement les espaces vides à l'intérieur de ladite munition.

2. Munition selon la revendication 1, **caractérisée en ce que** ledit matériau explosible est un bloc (11) de propergol solide inséré dans un moteur (1) à propergol solide, ce moteur (1) disposant d'un allumeur (12) destiné à initier en combustion ledit bloc (11) de propergol solide et d'une tuyère (13) par laquelle se dégagent les gaz issus de la combustion dudit bloc (11) de propergol solide.

3. Munition selon la revendication 2, **caractérisée en ce que** ledit bloc (11) de propergol solide est à canal central ; ledit au moins un sac (2) gonflable étant destiné à occuper, une fois gonflé, ou ledit au moins un sac (2) gonflable gonflé occupant, tout l'espace formé par le canal central dudit bloc (11) de propergol solide.

4. Munition selon la revendication 3, **caractérisée en ce que** ledit au moins un sac (2) gonflable gonflé s'étend dans tout le canal central dudit bloc (11) de propergol solide et jusque dans la tuyère (13) de manière à isoler ledit bloc (11) de propergol solide de l'atmosphère extérieur lorsque le moteur ne fonctionne pas.

5. Munition selon la revendication 2, **caractérisé en ce que** ledit bloc (11) de propergol solide est à combustion frontale et **en ce que** ledit au moins un sac (2) gonflable est destiné à occuper, une fois gonflé, ou ledit au moins un sac (2) gonflable gonflé occupe, l'espace vide situé en avant de la tuyère (13), entre l'arrière du moteur (1) et le bloc (11) de propergol solide.

6. Munition selon l'une quelconque des revendications 2 à 5, **caractérisée en ce que** l'allumeur (12) est en contact avec ledit au moins un sac (2) gonflé de manière à pouvoir percer ledit au moins un sac (2) gonflé lors de l'allumage, pour que celui-ci soit ensuite consumé ou éjecté vers l'extérieur par la tuyère (13).

7. Munition selon l'une quelconque des revendications 2 à 6, **caractérisée en ce que** le gaz servant au gonflement dudit au moins un sac (2) gonflable est réactif de manière à pouvoir participer à l'allumage du bloc (11) de propergol solide et ainsi, compléter l'effet de l'allumeur (12).

8. Munition selon la revendication 1, **caractérisée en ce que** le matériau explosible est un explosif (31) composite inséré dans une tête militaire (3), cette tête militaire (3) disposant d'un système d'amorçage (32) dudit explosif composite (31).

9. Munition selon la revendication 8, **caractérisée en ce que**, dans ladite tête militaire (3), ledit au moins un sac (4) gonflable, une fois gonflé, ou ledit au moins un sac (4) gonflé, est placé de sorte à maintenir l'explosif composite (31) vers l'avant de la tête militaire (3).

10. Munition selon la revendication 9, **caractérisée en ce que** ledit au moins un sac (4) gonflable comporte un orifice central permettant de laisser passer le système d'amorçage (32).

11. Munition selon l'une quelconque des revendications 1 à 10, **caractérisée en ce qu'**elle comprend des moyens de gonflage dudit au moins un sac (2, 4) gonflable actionnables sur commande à l'aide de moyens de commande.

12. Munition selon la revendication 11, **caractérisée en ce que** les moyens de commande des moyens de gonflage sont manuels.

13. Munition selon la revendication 11, **caractérisée en ce que** les moyens de commande des moyens de gonflage sont automatiques et réagissent à un événement.

14. Munition selon l'une quelconque des revendications 1 à 13, **caractérisée en ce que** ledit au moins un sac (2, 4) gonflable est constitué d'un matériau souple ou semi-rigide.

15. Utilisation d'au moins un sac (2, 4) gonflable étanche au sein de la coque d'une munition explosible renfermant un matériau explosible (11, 31), à titre de dispositif pour augmenter la sécurité et diminuer la vulnérabilité de ladite munition ; ledit au moins un sac gonflable étanche étant apte à occuper, partiellement ou complètement, les espaces vides à l'intérieur de la munition lorsqu'il est gonflé, pour assurer ainsi sa fonction ; ou
d'au moins un sac (2, 4) gonflable étanche gonflé, au sein de la coque d'une munition explosible renfermant un matériau explosible (11, 31), à titre de dispositif pour augmenter la sécurité et diminuer la vulnérabilité de ladite munition ; ledit au moins un sac gonflable étanche gonflé assurant sa fonction en occupant, partiellement ou complètement, les espaces vides à l'intérieur de la munition.

## Claims

1. Explosible ammunition comprising a casing (10, 30) having inserted therein an explosible material (11, 31) and a device for increasing the safety and reducing the vulnerability of said ammunition, the ammunition being **characterized in that** said device comprises at least one leaktight inflatable bag (2, 4) suitable for partially or completely occupying the empty spaces inside said ammunition when it is inflated, thereby to perform its function, or
at least one inflated leaktight inflatable bag (2, 4) performing its function by partially or completely occupying the empty spaces inside said ammunition.

2. Ammunition according to claim 1, **characterized in that** said explosible material is a block (11) of solid propellant inserted in a solid propellant motor (1), the motor (1) having an igniter (12) for initiating combustion of said block (11) of solid propellant, and a nozzle (13) through which the gas derived from the combustion of said solid propellant block (11) escapes.

3. Ammunition according to claim 2, **characterized in that** said solid propellant block (11) has a central channel; said at least one inflatable bag (2) being designed, once inflated, to occupy all of the space formed by the central channel of said solid propellant block (11), or said at least one inflated inflatable bag (2) occupying all of said space.

4. Ammunition according to claim 3, **characterized in that** said at least one inflated inflatable bag (2) extends along all of the central channel of said solid propellant block (11) and into the nozzle (13) so as to isolate said solid propellant block (11) from the outside atmosphere when the motor is not in operation.

5. Ammunition according to claim 2, **characterized in that** said solid propellant block (11) is an end-burning block and **in that** said at least one inflatable bag (2) is designed, once inflated, to occupy the empty space situated in front of the nozzle (13), between the rear of the motor (1) and the solid propellant block (11), or said at least one inflated inflatable bag (2) occupies said empty space.

6. Ammunition according to any one of claims 2 to 5, **characterized in that** the igniter (12) is in contact with said at least one inflated bag (2) so as to be capable of piercing said at least one inflated bag (2) on ignition, so that the bag is then consumed or ejected to the outside through the nozzle (13).

7. Ammunition according to any one of claims 2 to 6, **characterized in that** the gas used for inflating said at least one inflatable bag (2) is reactive so as to be capable of participating in ignition of the solid propellant block (11) and thereby supplement the effect of the igniter (12).

8. Ammunition according to claim 1, **characterized in that** the explosible material is a composite explosive (31) inserted in a warhead (3), said warhead (3) having a system (32) for igniting said composite explosive (31).

9. Ammunition according to claim 8, **characterized in that,** in said warhead (3), said at least one inflatable bag (4) once inflated, is placed in such a manner as to hold the composite explosive (31) towards the front of the warhead (3), or said at least one inflated bag (4) is placed to do the same.

10. Ammunition according to claim 9, **characterized in that** said at least one inflatable bag (4) includes a central orifice enabling the ignition system (32) to pass through.

11. Ammunition according to any one of claims 1 to 10, **characterized in that** it includes means for inflating said at least one inflatable bag (2, 4), which means are actuatable on control with the help of control means.

12. Ammunition according to claim 11, **characterized in that** the control means for the inflation means are manual.

13. Ammunition according to claim 11, **characterized in that** the control means for the inflation means are automatic and respond to an event.

14. Ammunition according to any one of claims 1 to 13, **characterized in that** said at least one inflatable bag (2, 4) is constituted by a material that is flexible or semi-rigid.

15. Use of at least one leaktight inflatable bag (2, 4) within the casing of an explosible ammunition containing an explosible material (11, 31), as a device for increasing the safety and reducing the vulnerability of said ammunition; said at least one leaktight inflatable bag being suitable for partially or completely occupying the empty spaces inside the ammunition when it is inflated in order to perform its function; or
use of at least one inflated leaktight inflatable bag (2, 4) within the casing of explosible ammunition containing an explosible material (11, 31), as a device for increasing the safety and reducing the vulnerability of said ammunition; said at least one inflated leaktight inflatable bag performing its function by partially or completely occupying the empty spaces inside the ammunition.

## Patentansprüche

1. Explosionsfähige Munition mit einer Hülse (10, 30), in die ein explosionsfähiges Material (11, 31) sowie eine Vorrichtung zur Erhöhung der Sicherheit und zur Verringerung der Empfindlichkeit der Munition eingebracht sind, **dadurch gekennzeichnet, daß** die Vorrichtung wenigstens einen dichten, aufblasbaren Sack (2, 4) umfaßt, der - wenn er aufgeblasen ist - geeignet ist, die Leerräume innerhalb der Munition teilweise oder vollständig auszufüllen, um so seine Wirkung sicherzustellen, oder wenigstens einen aufgeblasenen, dichten, aufblasbaren Sack (2, 4), der seine Wirkung **dadurch** sicherstellt, daß er die Leerräume innerhalb der Munition teilweise oder vollständig ausfüllt.

2. Munition nach Anspruch 1, **dadurch gekennzeichnet, daß** das explosionsfähige Material ein Festtreibstoffblock (11) ist, der in ein Feststofftriebwerk (1) eingesetzt ist, wobei dieses Triebwerk (1) über einen Zünder (12) verfügt, der dazu bestimmt ist, die Verbrennung des Festtreibstoffblocks (11) auszulösen, sowie über eine Düse (13), über welche die durch die Verbrennung des Festtreibstoffblocks (11) entstehenden Gase entweichen.

3. Munition nach Anspruch 2, **dadurch gekennzeichnet, daß** der Festtreibstoffblock (11) einen Mittelkanal aufweist, wobei der wenigstens eine aufblasbare Sack (2) dazu bestimmt ist, - sobald er aufgeblasen ist - den gesamten durch den Mittelkanal des Festtreibstoffblocks (11) gebildeten Raum auszufüllen, oder der wenigstens eine aufgeblasene aufblasbare Sack (2) den gesamten durch den Mittelkanal des Festtreibstoffblocks (11) gebildeten Raum ausfüllt.

4. Munition nach Anspruch 3, **dadurch gekennzeichnet, daß** der wenigstens eine aufgeblasene aufblasbare Sack (2) sich in dem gesamten Mittelkanal des Festtreibstoffblocks (11) sowie bis in die Düse (13) erstreckt, so daß der Festtreibstoffblock (11) von der Außenluft isoliert ist, wenn das Triebwerk nicht arbeitet.

5. Munition nach Anspruch 2, **dadurch gekennzeichnet, daß** der Festtreibstoffblock (11) stirnseitig abbrennt und daß der wenigstens eine aufblasbare Sack (2) dazu bestimmt ist, - sobald er aufgeblasen ist - den vor der Düse (13), zwischen dem hinteren Teil des Triebwerks (1) und dem Festtreibstoffblock (11) befindlichen Leerraum auszufüllen, oder der wenigstens eine aufgeblasene aufblasbare Sack (2) den vor der Düse (13), zwischen dem hinteren Teil des Triebwerks (1) und dem Festtreibstoffblock (11) befindlichen Leerraum ausfüllt.

6. Munition nach einem der Ansprüche 2 bis 5, **dadurch gekennzeichnet, daß** der Zünder (12) mit dem wenigstens einen aufgeblasenen Sack (2) in Kontakt ist, um den wenigstens einen aufgeblasenen Sack (2) während der Zündung zu durchstoßen, damit dieser anschließend vollständig verbrennt oder über die Düse (13) nach außen ausgestoßen wird.

7. Munition nach einem der Ansprüche 2 bis 6, **dadurch gekennzeichnet, daß** das zum Aufblasen des wenigstens einen aufblasbaren Sacks (2) dienende Gas reaktiv ist, so daß es an der Zündung des Festtreibstoffblocks (11) teilhaben und so die Wirkung des Zünders (12) ergänzen kann.

8. Munition nach Anspruch 1, **dadurch gekennzeichnet, daß** das explosionsfähige Material ein in einen Gefechtskopf (3) eingebrachter Verbundsprengstoff (31) ist, wobei dieser Gefechtskopf (3) über ein System (32) zum Zünden des Verbundsprengstoffs (31) verfügt.

9. Munition nach Anspruch 8, **dadurch gekennzeichnet, daß** der wenigstens eine aufblasbare Sack (4), sobald er aufgeblasen ist, oder der wenigstens eine aufgeblasene Sack (4) in dem Gefechtskopf (3) derart angeordnet ist, daß der Verbundsprengstoff (31) zum vorderen Teil des Gefechtskopfes (3) hin gehalten wird.

10. Munition nach Anspruch 9, **dadurch gekennzeichnet, daß** der wenigstens eine aufblasbare Sack (4) eine mittlere Öffnung aufweist, die das Durchgreifen des Zündsystems (32) ermöglicht.

11. Munition nach einem der Ansprüche 1 bis 10, **dadurch gekennzeichnet, daß** sie Mittel zum Aufblasen des wenigstens einen aufblasbaren Sacks (2, 4) aufweist, die auf Befehl mit Hilfe von Betätigungsmitteln betätigt werden können.

12. Munition nach Anspruch 11, **dadurch gekennzeichnet, daß** die Mittel zur Betätigung der Aufblasmittel manueller Art sind.

13. Munition nach Anspruch 11, **dadurch gekennzeichnet, daß** die Mittel zur Betätigung der Aufblasmittel automatischer Art sind und auf ein Ereignis reagieren.

14. Munition nach einem der Ansprüche 1 bis 13, **dadurch gekennzeichnet, daß** der wenigstens eine aufblasbare Sack (2, 4) aus einem flexiblen oder halbstarren Material besteht.

15. Verwendung wenigstens eines dichten, aufblasbaren Sacks (2, 4) innerhalb der ein explosionsfähiges Material (11, 31) enthaltenden Hülse einer explosionsfähigen Munition als Vorrichtung zur Erhöhung der Sicherheit und zur Verringerung der Empfindlichkeit der Munition, wobei der wenigstens eine dichte, aufblasbare Sack geeignet ist, - wenn er aufgeblasen ist - die Leerräume innerhalb der Munition teilweise oder vollständig auszufüllen, um so seine Winkung sicherzustellen;
oder wenigstens eines aufgeblasenen, dichten, aufblasbaren Sacks (2, 4) innerhalb der ein explosionsfähiges Material (11, 31) enthaltenden Hülse einer explosionsfähigen Munition als Vorrichtung zur Erhöhung der Sicherheit und zur Verringerung der Empfindlichkeit der Munition, wobei der wenigstens eine aufgeblasene, dichte, aufblasbare Sack seine Wirkung **dadurch** sicherstellt, daß er die Leerräume innerhalb der Munition teilweise oder vollständig ausfüllt.
